# FASCICULE DE BREVET EUROPEEN

(11) **EP 0 549 395 B1**
(45) Date de publication et mention de la délivrance du brevet: **01.05.1996**
(21) Numéro de dépôt: 92403354.1
(22) Date de dépôt: 09.12.1992
(51) Int. Cl.: B60S 1/38, B60S 1/34

(54) **Dispositif d'essuie-glace, notamment pour véhicule automobile, comportant des moyens de détection de la vitesse du vent relatif**
Scheibenwischeranlage mit einer Vorrichtung zur Bestimmung der relativen Windgeschwindigkeit, insbesondere für ein Kraftfahrzeug
Windscreen wiper comprising means for detection of the relative windspeed, especially for a motor vehicle

(30) Priorité: 20.12.1991 FR 9115925
(43) Date de publication de la demande: 30.06.1993
(73) Titulaire: PAUL JOURNEE S.A., F-92700 Colombes (FR)
(72) Inventeur: Journée, Maurice, F-60240 Reilly (FR)
(74) Mandataire: Lemaire, Marc

(56) Documents cités:
- DE-A- 3 347 546
- DE-A- 3 829 465
- PATENT ABSTRACTS OF JAPAN vol. 5, no. 119 (M-81)(791) 31 Juillet 1981 & JP-A-560 060 751 (NIPPON DENSO) 25 Mai 1981
- PATENT ABSTRACTS OF JAPAN vol. 8, no. 276 (M-346)(1713) 18 Décembre 1984 & JP-A-59 145 647 (JIDOUSHIYA DENKI) 21 Août 1984

## Description

La présente invention concerne un dispositif d'essuie-glace.

L'invention concerne plus particulièrement un dispositif d'essuie-glace pour véhicule automobile du type comportant un bras d'essuie-glace qui supporte un balai d'essuie-glace apte à essuyer une surface vitrée, par exemple du type comportant une monture qui porte une lame d'essuie-glace apte à venir frotter sur une surface vitrée du véhicule, tel que par exemple le pare-brise.

Différentes solutions ont été proposées pour améliorer les performances d'essuyage d'un tel type de dispositif d'essuie-glace.

On sait notamment que l'écoulement de l'air sur le pare-brise a tendance à provoquer le soulèvement du balai d'essuie-glace malgré l'action des moyens de rappel élastique qui sont habituellement prévus pour appliquer le balai sur la surface à essuyer avec une pression d'essuyage déterminée. Ce phénomène de soulèvement est d'autant plus important que la vitesse du véhicule équipé de l'essuie-glace est élevée.

Il a été proposé d'équiper l'essuie-glace d'un aileron de déflexion aérodynamique qui a pour but de dévier les flux d'air frappant le balai d'essuie-glace de manière à éviter le phénomène de soulèvement ou de décollement qui a pour conséquence de laisser intacte une pellicule d'eau sur la surface à essuyer qui gêne notablement la visibilité du conducteur.

Il est par exemple connu du document FR-A-2.556.297, un déflecteur d'air disposé sur le balai d'essuie-glace ou sur le bras d'essuie-glace afin de créer un effet aérodynamique de portance tendant à appliquer l'essuie-glace contre la surface à essuyer et ceci notamment à vitesse élevée.

Ce type de déflecteur présente des moyens d'accrochage sur le bras ou le balai et une partie déflectrice profilée dont la surface active de déflexion aérodynamique est de forme généralement convexe et est tournée vers la surface à essuyer de manière à appliquer au balai d'essuie-glace une force aérodynamique qui tende à le pousser vers la surface à essuyer.

Différentes solutions ont également été proposées pour faire varier la pression d'essuyage appliquée au balai par le bras d'essuie-glace et ceci en agissant par exemple sur la valeur de l'effort exercé sur le balai d'essuie-glace par les ressorts de rappel élastique agencés entre ce dernier et le bras d'essuie-glace en fonction de la vitesse de déplacement du véhicule (Voir, par exemple, les dispositifs révélés dans DE-A-3 347 546 ou DE-A-3 829 465).

On constate toutefois que ces différentes solutions ne donnent pas entièrement satisfaction dans la mesure où le comportement en essuyage du balai d'essuie-glace dépend en fait essentiellement des caractéristiques du vent relatif réel auquel est soumis le balai d'essuie-glace lors de son fonctionnement, et plus particulièrement de la vitesse de ce vent relatif qui dépend elle-même de la vitesse de déplacement du véhicule, du comportement routier du véhicule et notamment de son assiette, de la vitesse de balayage de l'essuie-glace, des conditions de température et de pression barométriques, etc.

Afin de remédier aux inconvénients qui viennent d'être mentionnés, l'invention objet de la présente demande propose un dispositif d'essuie-glace du type tel que défini dans le préambule de la revendication 1 et du type divulgué dans JP-A-60751/81, comportant des moyens de détection de la vitesse du vent relatif auquel est soumis le balai d'essuie-glace, comportant un capteur aérodynamique agencé sur le déflecteur et qui est relié à un générateur de signaux, selon les enseignements du document JP-A-60751/81, caractérisé en ce que le capteur aérodynamique comporte un volet aérodynamique dont une face active de détection est soumise au vent relatif sous l'action duquel le volet est susceptible de se déplacer à l'encontre de moyens de rappel élastiques, par rapport audit déflecteur, pour actionner le générateur de signaux relié aux moyens pour faire varier la pression d'essuyage et/ou la vitesse de balayage.

Selon des modes de réalisation de l'invention :
- le volet aérodynamique de détection est monté articulé autour d'un axe et sa face opposée à sa face active coopère avec un organe d'actionnement du générateur de signaux ;
- le déflecteur comporte au moins un aileron de déflexion aérodynamique et le volet aérodynamique de détection est constitué par une portion mobile de l'aileron de déflexion aérodynamique ;
- la portion mobile de l'aileron est articulée sur ce dernier autour d'un axe parallèle à la direction longitudinale principale de l'aileron aérodynamique de déflexion ;
- l'axe d'articulation est situé à proximité du bord d'attaque de l'aileron aérodynamique de déflexion ;
- les moyens de rappel élastique du volet comportent un ressort qui sollicite le volet en rotation autour de son axe d'articulation vers une position de repos dans laquelle la face active de détection du volet s'étend sensiblement en affleurement de la surface active de déflexion aérodynamique de l'aileron ;
- le générateur de signaux de commande comporte un interrupteur dont l'organe d'actionnement est actionné par le volet aérodynamique ;
- le générateur de signaux de commande comporte un potentiomètre électrique dont l'organe d'actionnement est actionné par le volet aérodynamique ; et
- le dispositif comporte des moyens électroniques d'analyse et de traitement des signaux provenant du générateur pour les convertir en des signaux de commande de moyens pour faire varier la pression d'essuyage et/ou la vitesse de balayage.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en section transversale qui illustre schématiquement un dispositif d'essuie-glace réalisé conformément aux enseignements de l'invention et dans laquelle le volet aérodynamique de détection est illustré dans sa position dite de repos ;
- la figure 2 est une vue similaire à celle de la figure 1 dans laquelle le volet aérodynamique de détection est illustré dans une position active ; et
- la figure 3 est une vue schématique en perspective qui illustre une portion de l'aileron aérodynamique de déflexion comportant le volet de détection.

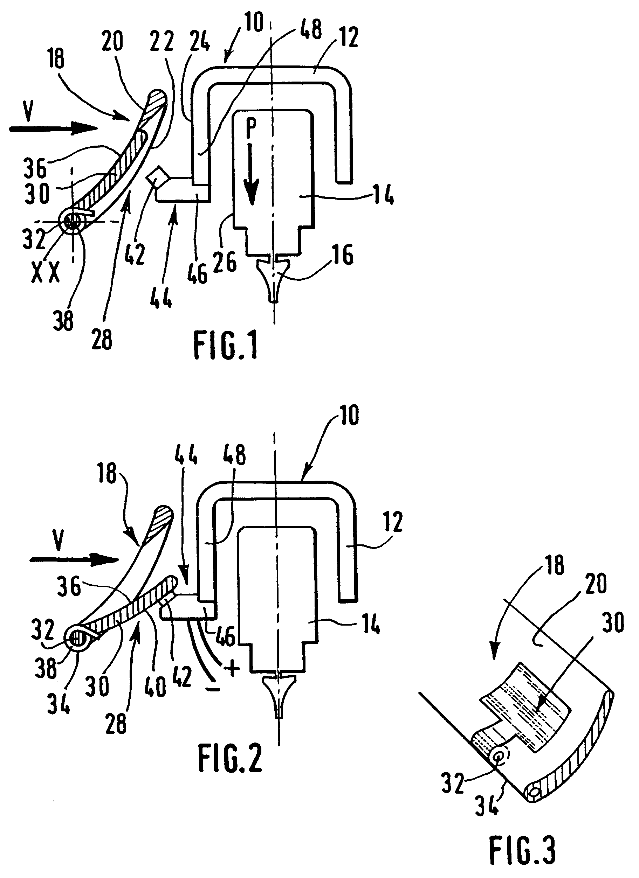

On reconnaît sur les figures 1 et 2, les principaux composants d'un dispositif d'essuie-glace 10.

Le dispositif d'essuie-glace 10 est constitué pour l'essentiel par un bras 12 auquel est relié un balai d'essuie-glace 14 qui porte une lame d'essuyage 16 apte à essuyer une surface vitrée (non représentée).

Le bras d'essuie-glace 12 est également équipé d'un aileron aérodynamique de déflexion 18 qui est par exemple du type de celui décrit et représenté dans le document FR-A-2.556.297.

Un tel aileron de déflexion aérodynamique 18, également appelé déflecteur aérodynamique, présente une forme d'aile à profil inversé dont la face aérodynamique active 20 de profil concave est tournée en direction du vent relatif V et dont la face convexe arrière 22 s'étend en regard des composants mobiles du dispositif d'essuie-glace, et notamment devant la face latérale 24 du bras d'essuie-glace 12 et la face latérale 26 du balai d'essuie-glace 14.

La position du déflecteur aérodynamique 18 par rapport aux principaux composants 12 et 14 du dispositif d'essuie-glace est déterminée de manière, d'une part à éviter les phénomènes de décollement et, d'autre part, à appliquer à la lame d'essuyage 16 une portance aérodynamique qui vient accroître la pression d'essuyage P qui lui est appliquée par le bras d'essuie-glace 12 par l'intermédiaire du balai d'essuie-glace 14.

Conformément à l'invention, et de manière à faire varier la pression d'essuyage P et/ou la vitesse de balayage du dispositif d'essuie-glace, il est prévu des moyens 28 de détection de la vitesse du vent relatif V auquel est soumis le balai d'essuie-glace 14.

Conformément à l'invention illustrée aux figures 1 à 3, les moyens 28 comportent un volet de détection 30.

De manière particulièrement avantageuse, le volet 30 est constitué par une portion du déflecteur 18 qui est montée articulée sur ce dernier autour d'un axe d'articulation 32 agencé au voisinage du bord inférieur d'attaque 34 du déflecteur 18 et qui s'étend selon une direction X-X sensiblement parallèle à la direction longitudinale principale du déflecteur 18.

Le volet aérodynamique de détection 30 articulé sur le déflecteur 18 est ainsi susceptible de pivoter autour de son axe, du fait de l'action qu'exerce le vent relatif V sur sa face aérodynamique active concave 36, entre sa position de repos illustrée à la figure 1 et une position active telle que celle illustrée à la figure 2.

Ce pivotement s'exerce, sous l'action du vent relatif V, à l'encontre de l'effort de rappel qui est appliqué au volet 30 par un ressort de rappel 38 qui est un ressort de torsion qui sollicite le volet 30 vers sa position de repos illustrée à la figure 1.

Le choix de la valeur de l'effort de rappel que le ressort 38 applique au volet 30 détermine la vitesse du vent relatif V à partir de laquelle le volet 30 va commencer à pivoter, dans le sens horaire en considérant les figures, autour de son axe de rotation X-X.

Lorsque la vitesse du vent relatif V dépasse une valeur prédéterminée, le volet aérodynamique de détection 30 atteint sa position active illustrée à la figure 2 dans laquelle sa face arrière 40 opposée à sa face active de détection 36 vient coopérer avec l'organe d'actionnement 42 d'un générateur de signaux électriques 44.

Dans le mode de réalisation illustré aux figures, le générateur 44 est un interrupteur électrique dont le boîtier 46 est fixé sur l'aile latérale 48 du bras d'essuie-glace 12.

On comprend donc que les moyens 28 constituent des moyens efficaces de détection directe de la vitesse du vent relatif V.

Les signaux électriques produits par le générateur de signaux 44 sont ensuite transmis à des moyens (non représentés) d'analyse et de traitement électronique de ces signaux qui ont pour fonction de les convertir en des signaux de commande de moyens prévus pour faire varier la pression d'essuyage P et/ou la vitesse de balayage de l'essuie-glace.

Lorsque, comme dans le cas du mode de réalisation illustré aux figures, le générateur de signaux 44 est un simple interrupteur à deux positions, les moyens de détection 28 ne permettent de détecter que le dépassement d'une vitesse déterminée.

Sans sortir du cadre de l'invention, il est bien entendu possible de prévoir que le volet aérodynamique de détection 30 agisse sur un générateur de signaux, tel que par exemple un potentiomètre rhéostatique qui produit des signaux qui varient de manière continue en fonction de la vitesse du vent relatif V dès que cette dernière à dépassé la valeur initiale prédéterminée qui dépend du tarage du ressort de rappel élastique.

De plus, et afin d'éviter les phénomènes d'oscillation parasite et de battement qui pourraient résulter de variations trop fréquentes de la vitesse du vent relatif V autour de la valeur prédéterminée de détection, les moyens d'analyse et de traitement des signaux peuvent assurer une fonction d'amortissement et de temporisation.

## Revendications

1. Dispositif d'essuie-glace (10), notamment pour véhicule automobile, du type comportant un bras d'essuie-glace (12) qui supporte un balai d'essuie-glace (14) apte à essuyer une surface vitrée, un déflecteur (18) et des moyens commandés pour faire varier la pression d'essuyage (P) appliquée au balai d'essuie-glace (14) par le bras d'essuie-glace et/ou la vitesse de balayage en fonction d'au moins un paramètre de commande, et comportant des moyens (28) de détection de la vitesse du vent relatif (V) auquel est soumis le balai d'essuie-glace, lesdits moyens de détection (28) comportant un capteur aérodynamique (30) agencé sur le déflecteur (18) du dispositif d'essuie-glace et relié à un générateur de signaux (44), caractérisé en ce que le capteur aérodynamique comporte un volet aérodynamique (30) dont une face active de détection (36) est soumise au vent relatif (V) sous l'action duquel ledit volet (30) est susceptible de se déplacer à l'encontre de moyens de rappel élastiques (38), par rapport audit déflecteur (18), pour actionner le générateur (44) de signaux relié auxdits moyens pour faire varier la pression d'essuyage (P) et/ou la vitesse de balayage.

2. Dispositif selon la revendication 1, caractérisé en ce que le volet aérodynamique de détection (30) est monté articulé autour d'un axe (32), et en ce que sa face (40) opposée à ladite face active de détection (36) coopère avec un organe (42) d'actionnement du générateur de signaux (44).

3. Dispositif selon l'une des revendications 1 ou 2, caractérisé en ce que le déflecteur comporte au moins un aileron de déflexion aérodynamique, et en ce que le volet aérodynamique de détection (30) est constitué par une portion mobile de l'aileron (18) de déflexion aérodynamique.

4. Dispositif selon la revendication 3 prise en combinaison avec la revendication 2, caractérisé en ce que ladite portion mobile est articulée sur l'aileron (18) autour d'un axe (32) parallèle à la direction longitudinale principale de l'aileron (18).

5. Dispositif selon la revendication 4, caractérisé en ce que l'axe d'articulation (32) est situé à proximité du bord d'attaque (34) de l'aileron de déflexion aérodynamique (18).

6. Dispositif selon l'une des revendications 4 ou 5, caractérisé en ce que les moyens de rappel élastique (38) comportent un ressort qui sollicite le volet (30) en rotation autour de son axe d'articulation vers une position de repos dans laquelle la surface active de détection du volet (30) s'étend sensiblement en affleurement avec la surface active de déflexion aérodynamique (20) de l'aileron (18).

7. Dispositif selon l'une quelconque des revendications 1 à 6, caractérisé en ce que le générateur de signaux de commande (44) comporte un interrupteur dont l'organe d'actionnement (42) est actionné par le volet aérodynamique (30).

8. Dispositif selon l'une quelconque des revendications 1 à 6, caractérisé en ce que le générateur de signaux de commande comporte un potentiomètre électrique dont l'organe d'actionnement est actionné par le volet aérodynamique (30).

9. Dispositif selon l'une quelconque des revendications 1 à 8, caractérisé en ce qu'il comporte des moyens électroniques d'analyse et de traitement desdits signaux pour les convertir en des signaux de commande desdits moyens pour faire varier la pression d'essuyage (P) et/ou la vitesse de balayage.

## Claims

1. Screen wiper apparatus (10), especially for a motor vehicle, of the type comprising a screen wiper arm (12) which carries a screen wiper blade (14) for wiping over a glazed surface, a deflector (18) and means which are controlled so as to vary the wiping pressure (P) applied to the screen wiper blade (14) by the screen wiper arm, and/or the wiping speed, as a function of at least one control parameter, and including means (28) for detecting the relative wind speed (V) to which the screen wiper blade is subjected, the said detecting means (28) comprising an aerodynamic sensor (30), which is arranged on the deflector (18) of the screen wiper apparatus and connected to a signal generator (44), characterised in that the aerodynamic sensor comprises an aerodynamic flap (30), a working detection surface (36) of which is subjected to the relative wind (V), which causes the said flap (30) to be displaced against the action of resilient return means (38) with respect to the said deflector (18), so as to activate the signal generator (44) that is connected to the said means, whereby to cause the wiping pressure (P) and/or the wiping speed to be varied.

2. Apparatus according to Claim 1, characterised in that the aerodynamic detector flap (30) is articulated about a pivot (32), and in that its surface (40) opposite to the said working detection surface (36) cooperates with an actuating member (42) of the signal generator (44).

3. Apparatus according to claim 1 or Claim 2, characterized in that the deflector comprises at least one aerodynamic deflecting aileron, and in that the aerodynamic detector flap (30) consists of a movable portion of the aerodynamic deflecting aileron (18).

4. Apparatus according to Claim 3 taken in combination with Claim 2, characterised in that the said movable portion is articulated on the aileron (18) about a pivot (32) parallel to the main longitudinal direction of the aileron (18).

5. Apparatus according to Claim 4, characterised in that the articulating pivot (32) is situated close to the leading edge (34) of the aerodynamic deflecting aileron (18).

6. Apparatus according to Claim 4 or Claim 5, characterised in that the resilient return means (38) comprise a spring which biases the flap (30) in rotation about its pivot axis, towards a rest position in which the working detection surface of the flap (30) is substantially flush with the aerodynamic working deflection surface (20) of the aileron (18).

7. Apparatus according to any one of Claims 1 to 6, characterised in that the control signal generator (44) comprises an interruptor, the actuating member (42) of which is operated by the aerodynamic flap (30).

8. Apparatus according to any one of Claims 1 to 6, characterised in that the control signal generator comprises an electrical potentiometer, the actuating member of which is operated by the aerodynamic flap (30).

9. Apparatus according to any one of Claims 1 to 8, characterised in that it includes electronic means for analysing and processing the said signals, so as to convert them into signals for control of the said means for varying the wiping pressure (P) and/or wiping speed.

## Patentansprüche

1. Scheibenwischeranlage (10), insbesondere für ein Kraftfahrzeug, in der Ausführung mit einem Scheibenwischerarm (12), an dem ein Scheibenwischerblatt (14) zum Wischen einer Glasfläche, ein Luftleitblech (18) und gesteuerte Mittel angebracht sind, um den durch den Scheibenwischerarm (12) auf das Scheibenwischerblatt (14) ausgeübten Wischdruck (P) und/oder die Wischgeschwindigkeit in Abhängigkeit von wenigstens einem Steuerparameter zu verändern, zu denen Mittel (28) zur Bestimmung der auf das Wischerblatt einwirkenden relativen Windgeschwindigkeit (V) gehören, wobei die besagten Bestimmungsmittel (28) einen aerodynamischen Sensor (30) umfassen, der am Luftleitblech (18) der Scheibenwischeranlage angeordnet und mit einem Signalgeber (44) verbunden ist , **dadurch gekennzeichnet**, daß der aerodynamische Sensor eine aerodynamische Klappe (30) umfaßt, deren Bestimmungswirkfläche (36) dem relativen Wind (V) ausgesetzt ist, unter dessen Einwirkung sich die besagte Klappe (30) entgegen elastischen Rückstellmitteln (38) im Verhältnis zu dem besagten Luftleitblech (18) verschieben kann, um den Signalgeber (44) zu betätigen, der mit den besagten Mitteln verbunden ist, um den Wischdruck (P) und/oder die Wischgeschwindigkeit zu verändern.

2. Anlage nach Anspruch 1, **dadurch gekennzeichnet**, daß die aerodynamische Bestimmungsklappe (30) gelenkig um eine Achse (32) angebracht ist und daß ihre der Bestimmungswirkfläche (36) gegenüberliegende Fläche (40) mit einem Organ (42) zur Betätigung des Signalgebers (44) zusammenwirkt.

3. Anlage nach einem der Ansprüche 1 oder 2 , **dadurch gekennzeichnet**, daß das Luftleitblech wenigstens eine aerodynamische Luftleitlamelle umfaßt und daß die aerodynamische Bestimmungsklappe (30) aus einem beweglichen Teilstück der aerodynamischen Luftleitlamelle (18) besteht.

4. Anlage nach Anspruch 3 in Kombination mit Anspruch 2, **dadurch gekennzeichnet**, daß das besagte bewegliche Teilstück an der Lamelle (18) um eine Achse (32) angelenkt ist, die parallel zur Hauptlängsrichtung der Lamelle (18) verläuft.

5. Anlage nach Anspruch 4, **dadurch gekennzeichnet**, daß die Gelenkachse (32) in der Nähe der Vorderkante (34) der aerodynamischen Luftleitlamelle (18) angeordnet ist.

6. Anlage nach einem der Ansprüche 4 oder 5 , **dadurch gekennzeichnet**, daß die elastischen Rückstellmittel (38) eine Feder umfassen, die die Klappe (30) drehend um ihre Gelenkachse zu einer Ruhestellung hin beaufschlagt, in welcher sich die Bestimmungswirkfläche der Klappe (30) in etwa bündig zur aerodynamischen Luftleitfläche (20) der Lamelle (18) erstreckt.

7. Anlage nach einem der Ansprüche 1 bis 6 , **dadurch gekennzeichnet**, daß der Steuersignalgeber (44) einen Schalter umfaßt, dessen Betätigungsorgan (42) durch die aerodynamische Klappe (30) betätigt wird.

8. Anlage nach einem der Ansprüche 1 bis 6 , **dadurch gekennzeichnet**, daß der Steuersignalgeber ein elektrisches Potentiometer umfaßt, dessen Betätigungsorgan durch die aerodynamische Klappe (30) betätigt wird.

9. Anlage nach einem der Ansprüche 1 bis 8 , **dadurch gekennzeichnet**, daß sie elektronische Mittel zur Auswertung und Verarbeitung der besagten Signale für ihre Umwandlung in Steuersignale zur Steuerung der besagten Mittel umfaßt, um den Wischdruck (P) und/oder die Wischgeschwindigkeit zu verändern.
